# EUROPEAN PATENT SPECIFICATION

(11) **EP 0 556 491 B1**
(45) Date of publication and mention of the grant of the patent: **27.12.1995**
(21) Application number: 92201765.2
(22) Date of filing: 17.06.1992
(51) Int. Cl.: B29D 30/02, B60C 7/10

(54) **Method for producing full-rubber tyres and full-rubber tyres obtained in this way**
Vollgummireifen und Verfahren zu deren Herstellung
Pneumatiques pleins et leur procédé de fabrication

(30) Priority: 11.02.1992 BE 9200143
(43) Date of publication of application: 25.08.1993
(73) Proprietor: SOLIDEAL N.V., B-9160 Lokeren (BE)
(72) Inventor: Pringiers, Pierre, Colombo 3 (LK)
(74) Representative: Donné, Eddy

(56) References cited:
- US-A- 1 380 496
- US-A- 1 544 639
- US-A- 3 827 792

## Description

The invention concerns a method for producing full-rubber tyres, as well as the thus obtained full-rubber tyres, such as used for example in vehicles, among others industrial vehicles, such as forklift trucks.

More in particular the present invention aims a method which can be generally used for producing full-rubber tyres in which recycled material of for example old industrial full-rubber tyres or such like can be processed.

It is known that full-rubber tyres, which are produced of 100% new material up to the present, show various disadvantages. The full-rubber tyres produced in this way are indeed expensive and they cause problems as far as the increasing heap of waste tyres is concerned.

Also, the present invention aims a method which, on the one hand, helps to solve the problem of rubber waste treatment by partly recycling the large amount of unused material of worn-out full-rubber tyres or other solid rubber pieces, and, on the other hand, offers a new product which is equivalent to similar tyres made of 100% new material as far as appearance and quality are concerned.

In order to recycle a large amount of residual material, it has already been suggested to apply a new rubber layer on old rubber tyres.

A first method to this end consists in reapplying rubber by means of cold retreading. Hereby, the outside surface of the tyre is chipped and a pre-vulcanized tread is applied to subsequently vulcanize the whole under pressure in autoclave at a low temperature, for example 80 degrees Celsius.

However, this method has various disadvantages. A first disadvantage consists in that, after this treatment, the tyre, apart from the tread, still has the appearance of a worn-out tyre since only a thin layer of new rubber is applied on the tread. Another disadvantage of this method is that the existing bead toe of the tyre is not repaired, so that there is a risk of fatigue of the re-used rubber material, causing the tyre to slip on the rim. Another disadvantage is that accidental cracks and fatigue cracks can only be partially repaired or not repaired at all and only carcasses which are in very good condition can be used.

According to a second method, such a reapplication of rubber is done by means of warm retreading. The principle is analogous to the above-mentioned method, but the vulcanization is carried out at a higher temperature in this case. The appearance of the thus obtained tyre is in general slightly better, but the above-mentioned disadvantages are also present here.

According to a third method, both the tread and the flanks of the worn-out tyre are coated with rubber, after the tread and flanks of the tyre have been chipped and provided with an adhesive material, whereby the whole is vulcanized in a mould. This method also shows various disadvantages, however. The inner circumference of the tyre indeed still has the appearance of a used tyre, since the old bead toe structure remains, and fatigue cracks, whether or not hidden, can wreck the tyre after a short period. For this method also, only carcasses in very good condition can be used and only surface faults, in other words visible faults, can be repaired.

The main disadvantage of these known methods for reapplying rubber lies in the fact that the bead toe construction is always re-used. Indeed, such a bead toe construction in general consists of a rubber bead toe part containing an armouring which is for example made up of surrounding bars, cables, fabric layers or such like, whereby this bead toe part is clamped between the flanges of the rim as the tyre is used and whereby this bead toe part, together with the armouring, provides for the required seizure between the tyre and the wheel, such that this bead toe construction is constantly subject to tension and thus liable to relaxation and fatigue phenomena and other damages, whereby these damages may consist of both inner and outer cracks.

The present invention concerns a method for producing new full-rubber tyres of recycled material, which differs completely from the above-mentioned methods for reapplying rubber, and which does not show said disadvantages.

To this end, according to the method of the invention, the full-rubber tyre is formed of a core of recycled material, for example originating from an old tyre of which all worn-out and damaged parts have been removed, and whereby the tread, the flanks as well as the bead toe construction, in other words the rubber bead toe provided with the armouring of fabric or steel, are formed of 100% new rubber material.

The use of 50 to 80% of recycled material in the material used for a new tyre does not only result in a lower cost price than that of tyres made of 100% new material, but also offers an environmental advantage in that it helps to reduce the heap of waste tyres.

The method according to the invention which offers the above-mentioned and other advantages mainly consists in the formation of a core of recycled material; the application on this core of the tread, the flanks and the bead toe of the tyre, preferably provided with an armouring, and subsequently the vulcanizing of the tyre in a mould.

The core may either consist of a full-rubber core originated from an old tyre or such like, or it may be composed of several, whether or not similar parts formed of recycled full rubber or compressed, ground rubber or such like. The armouring of the tyre may hereby be composed of rubber, steel wire, fabric or such like, whether or not applied in combination with one another.

The vulcanizing of the tyre is done in a mould, as is known under the influence of pressure, temperature and time, whereby the mould determines the final dimensions, form and appearance of the tyre.

In order to better explain the characteristics of the invention, by way of example only and without being limitative in any way, the following preferred embodiments are described, with reference to the accompanying drawings, where:
figure 1 shows a side view of a full-rubber tyre according to the invention;
figure 2 shows a section according to line II-II in figure 1, to a larger scale;
figures 3 and 4 show sections similar to those in figure 2, but for variants;
figure 5 shows the part which is indicated in figure 4 by F5, but to a larger scale;
figures 6 and 7 are variants of figure 5;
figures 8 and 9 show possible embodiments of reinforcement rings, in particular armouring for full-rubber tyres according to the invention;
figure 10 shows a partial cross section of a full-rubber tyre according to line X-X in figure 4;
figure 11 shows a cross section similar to that in figure 10, but for a variant;
figures 12 to 17 show the different stages of the method according to the invention to a greater detail.

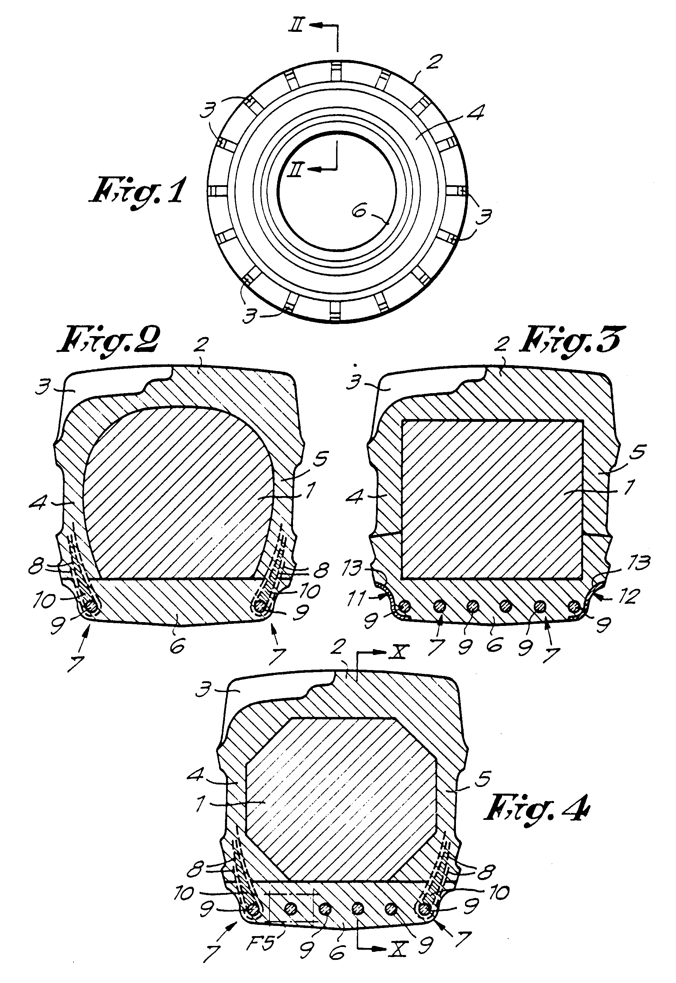

As shown in figures 1 and 2, a full-rubber tyre according to the invention is mainly made up of a core 1, a tread 2 with grooves 3, flanks 4, 5 and a bead toe 6, preferably provided with an armouring 7.

According to figure 2, the armouring 7 on both sides of the tyre is made up of one or more double-folded fabric layers 8, in this case two layers whose free ends end up in the adjacent flanks 4,5; two rings of high-quality steel wire 9 and hard rubber keys 10 which have been applied between the fabric layers 8.

The invention is special in that the core 1 consists of recycled material whereby nevertheless the quality level of new tyres is equalled. The recycled material may for example come from worn-out or damaged tyres, but it may also come of any rubber structure whatsoever, or any equivalent, which meets the requirements. The quality of the tyres according to the invention is hereby in no way whatsoever influenced by the number of times the core is being re-used to produce new tyres, since the core is that part of the tyre which is hardly loaded, and thus is not liable to damages.

In order to obtain the core 1, the damaged or worn-out zones of the original form are removed through peeling off on existing and adjusted tyre peeling machines, through turning away or slicing on an adjusted lathe as far as the old tread and the side flanks are concerned. As shown in figure 2, the shape of the obtained core 1 does not have to correspond exactly to the final shape of the finished tyre.

According to the method, the future core 1 is for example roughened by means of a tyre roughening machine until the required roughness is obtained in order to guarantee sufficient adhesion. The inner wall with the possibly damaged armouring, but in every way relaxed and fatigued rubber is removed by means of cutting punching rings, under a press or cut off on an adjusted lathe. The inner wall can then be further roughened by means of an adjusted roughening machine.

The roughened core is subsequently treated with known adhesive materials, specially developed for the rubber industry, for example a dissolution in which rubber is solved in petrol. After the application and drying of these adhesive materials, the future core can be wrapped in a special, thin layer of adhesion rubber known as such, such as for example the so-called "cushion gum" which has specific adherence qualities before and after the vulcanization, in order to simplify the adhesion of the new rubber pieces, in particular of tread 2, flanks 4, 5 and the bead toe 6.

According to the invention the bead toe 6 is formed of new rubber which is sufficiently hard and provided with an armouring 7 which has been applied in a zone which is strongly subject to fatigue and tension due to the load caused by the contact with the wheel flanges.

As shown in figure 2, the bead toe 6 is applied beneath the core 1, meaning on the inner wall of the roughened structure. This can be done by subsequently applying several layers of rubber or by folding an injection-moulded piece of rubber having the correct dimensions in the inner wall. The bead toe 6 may possibly form one whole with part of the flanks 4,5.

The new tread 2 and the flanks 4 and 5 are applied in one or several layers on a known tyre building machine by means of wrapping, whereby these layers may come from a rubber roller, a calender or an extruder. The tread 2 may form one whole with the flanks 4, 5, whereas the bead toe 6 forms a second part. The flanks can also be applied on the side in the form of discs, the tread can be coiled.

The armouring 7, whereby a rubber key 10 is placed on the steel wires 9 surrounded by fabric layers 8, is pre-manufactured.

The fabric layers 8 may for example consist of a more or less open structure of polyamide or polyester which has been specially treated for adhesion, or of another, similar fabric.

The rubber key 10 must be sufficiently hard in order to reduce deformations during the vulcanization and during the use of the tyre.

The composed whole is finally applied on the right place and is coated with a wear-resistant and well-adhering rubber. This system guarantees a radial non-deformability, especially in the case of axial compression.

The thus obtained construction is vulcanized in the conventional manner in a mould which may either consist of two pieces and close axially or which may consist of eight pieces and close partially axially and partially radially. The mould is applied in a press, preferably under a pressure of at least 10 bar, but advisably of 50 bar or more, at a temperature of at least 130 degrees Celsius and for a sufficiently long time, depending on the dimensions of the tyre.

The distribution of the new rubber to be applied on the flanks, the tread and the bead toe is very critical in view of the deformations of the recycled part in the mould, and it must be precisely determined beforehand and finally applied.

The core 1 can also be placed in a mould after which rubber can be injected around the core 1, thus forming the tread 2, the flanks 4, 5 and the bead toe 6. There are various techniques to do this.

According to a first technique the core 1 is prepared, the bead toe 6 is applied with the armouring 7 and possibly a part of the flanks 4, 5 is applied. The whole is then placed in a mould, in which the new rubber for the tread 2 and partially for the flanks 4, 5 is injected.

According to a second technique the armouring 7, the flanks 4, 5 and the tread 2 are applied on the core 1. The whole is placed in a mould and the bead toe is 6 is injected.

According to a third technique, the core 1, the steel wires 9, the fabric layers 8 and the flanks 4, 5 are placed in a mould, after which the tread 2 and the bead toe 6 are injected by means of two separate systems.

The mould determines the final dimensions, shape, appearance and tread design of the tyre, whereby the thus obtained full-rubber tyre is qualitatively equivalent to tyres made of 100% new material and can in no way be distinguished from such tyres made of 100% new material from the outside.

Figure 3 shows how, according to a variant, the steel wires 9 are placed at a certain distance from one another in order to absorb the radial forces. The core 1 has a square section in this case, which is for example determined by the removal of damaged parts of an original piece, for example an old tyre. Figure 3 also shows reinforced bead toe sides 11, 12 which consist of one or several layers of fabric 13 coated with rubber, in order to prevent wear and cracks. These layers 13 can be applied over any length whatsoever. According to this embodiment, the bead toe 6 is made in a U-shape since it partially forms the flanks 4, 5.

In the construction as shown in figure 4, thanks to the combination of armourings, as indicated in figures 2 and 3, both axial and radial compressions are maximally reckoned with. The armouring is formed here by several steel wires 9 applied next to one another in the bead toe 6, whereby the two outermost steel wires 9 which have been applied in a corner of the bead toe 6 are surrounded by at least one double-folded fabric layer 8 whose free ends end up in the flanks 4, 5.

The octagonal form of the core 1 may in this case also result from the removal of damages and/or cracks from an original piece. It is clear that the form of the core 1 is totally arbitrary.

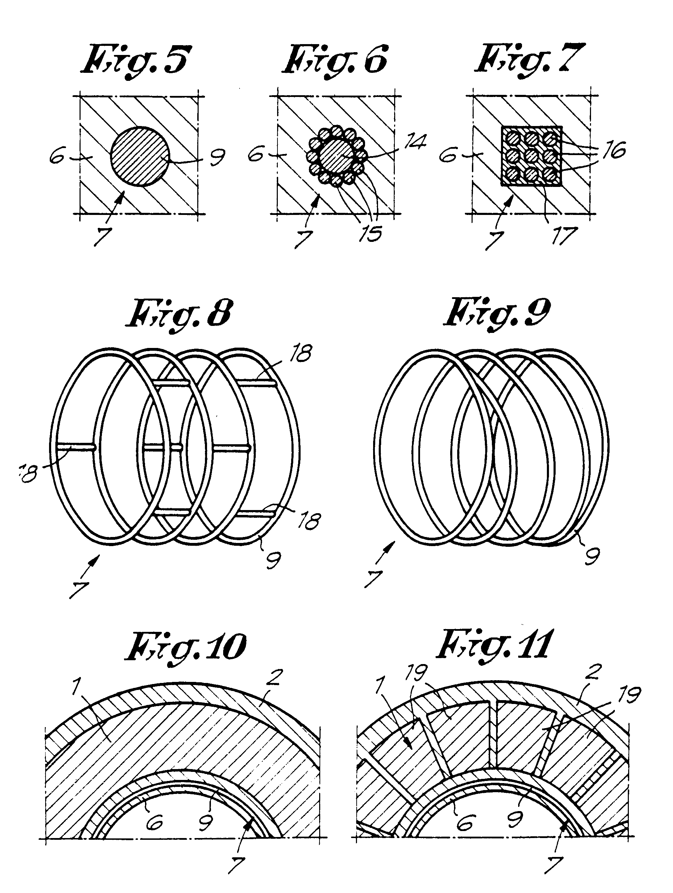

As shown in figure 5, the steel wire 9 may consist of solid, individual steel rings. The dimensions and strength of the steel wire 9 can be determined by the dimensions of the tyre.

A variant to this is shown in figure 6, where cable cores are represented consisting of a solid ring 14 surrounded by spirally coiled, thinner steel wire 15. As an extra reinforcement, it is possible to wind a fabric around it which is not represented in the drawing.

Figure 7 shows a third variant of the steel wire 9, which in this case consists of a package of thin steel wires 16, embedded in a rectangular, square or hexagonal rubber mould 17.

As shown in figure 8, the steel wire 9 can be circle-shaped and the steel wires 9 lying side by side can be interconnected by means of short metal pieces 18.

Figure 9 shows yet another variant of the steel wire 9 whereby this is spirally coiled.

Figure 10 shows a cross section of the position of the core 1 with regard to the renewed layers, whereby the core 1 is built up of one cylinder-shaped whole.

Figure 11 shows a variant, similar to that in figure 10, whereby the core 1 is built up of one or several, whether or not equal blocks 19 which are placed side by side and which are made of full rubber, compressed ground rubber, possibly mixed with adhesive materials, fabric, new rubber or such like.

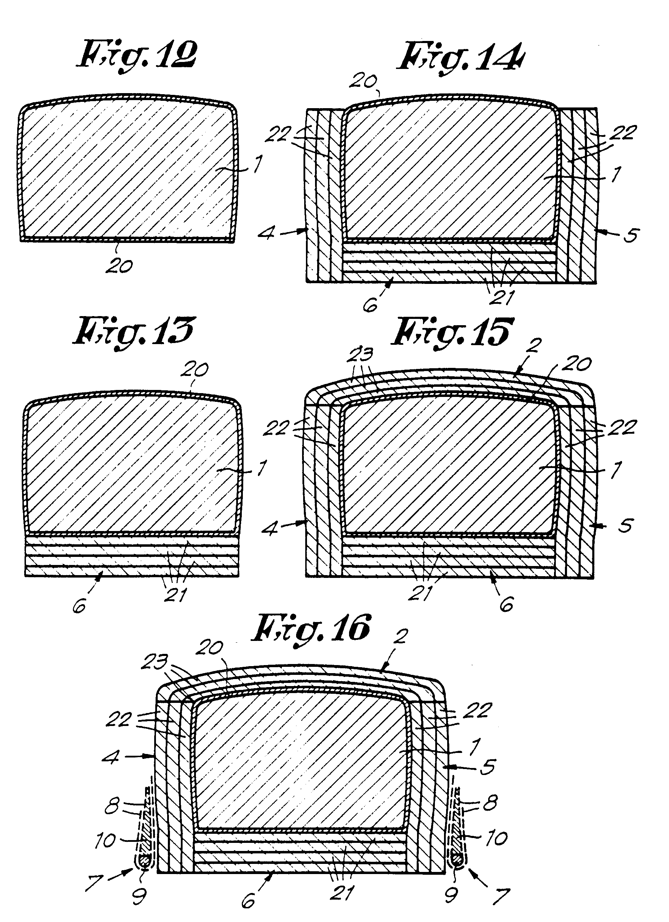

The method according to a preferred embodiment is represented in figures 12, 13, 14, 15, 16 and 17.

Figure 12 shows the roughened core 1, which was obtained according to the above-mentioned actions, and whereby this core 1 is covered over its entire outside surface with a thin layer of adhesive material or adhesion rubber 20.

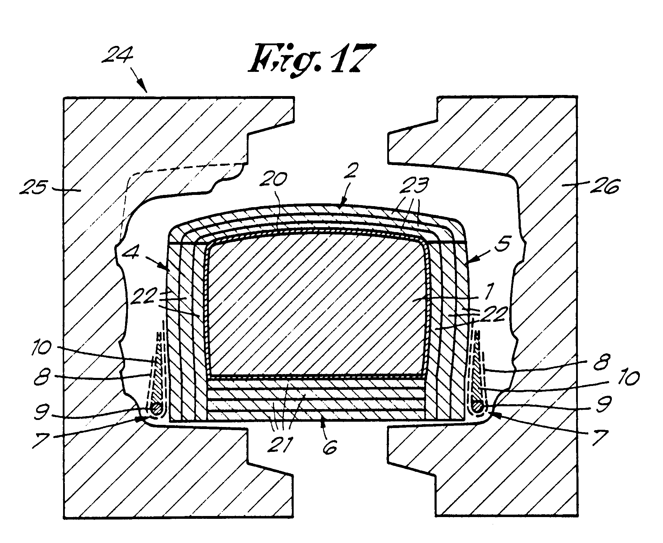

On the core 1 which is thus coated with adhesive material 20, as shown in figure 13, the bead toe 6 is positioned by applying several layers 21 of new rubber one on top of the other.

As shown in figure 14, the new rubber layer on the flanks 4, 5 is formed by applying the rubber in the form of discs 22.

Subsequently, new rubber is applied on the tread 2. In figure 15, this is represented by the piled-up layers 23 on top of the core 1.

Figure 16 shows the position of the pre-manufactured armouring 7 in relation to the newly applied rubber. The armouring 7 consists in this case, on both sides of the edge toe 6, of ring-shaped steel wire 9 with on top of it a rubber key 10 and surrounded by fabric layers 8.

Subsequently, the thus obtained whole, as shown in figure 17, is placed in a mould 24, which for example consists of two parts 25, 26 and which closes axially. The mould is situated in a press, which is not represented in figure 17, which makes sure that the mould 24 is entirely closed as it is activated. Hereby, the rubber, under influence of the pressure and the heat, flows in all corners of the mould shape and assumes this shape entirely.

The thus finished tyre, after it has been vulcanized during about 2 hours at a temperature of approximately 135 degrees Celsius, will assume the shape as shown in the cross-section in figure 2 in this example.

The present invention is in no way limited to the embodiments described by way of example and shown in the accompanying drawings; on the contrary, such a method and the thus obtained full-rubber tyre can be made in all sorts of variants while still remaining within the scope of the invention.

## Claims

1. Method for producing full-rubber tyres, characterized in that it consists in the formation of a core (1) of recycled material; the application on this core (1) of the tread (2), the flanks (4,5) and the bead toe (6) of the tyre, preferably provided with an armouring (7); and subsequently the vulcanizing of the tyre in a mould.

2. Method according to claim 1, characterized in that the full-rubber tyre is obtained by roughening the core (1) from recycled material; the treatment of this core with an adhesive material known as such; the drying of this adhesive; the coating of the thus formed core (1) with new rubber so as to form the tread (2), the flanks (4,5) and the bead toe (6).

3. Method according to claim 2, characterized in that, after the adhesive material which has been applied on the core (1) has dried, an adhesion rubber known as such is wrapped around this core before the coating which is to form the new tread (2), the flanks (4,5) and the bead toe (6) is applied.

4. Method according to claim 2 or 3, characterized in that the tread (2) and the flanks (4,5) consist of one whole, whereas the bead toe (6) forms the second part.

5. Method according to claim 4, characterized in that part of the flanks (4,5) forms one whole with the bead toe (6).

6. Method according to any of the above claims, characterized in that the tread (2) with flanks (4,5) on the one hand and the bead toe (6) with possibly partial flanks (4,5) on the other hand are formed by different rubber layers which are successively applied in the mould in which the tyre is to be vulcanized.

7. Method according to any of claims 1 to 5, characterized in that around the core (1) placed in a mould new rubber is injected to form the tread (2), the flanks (4,5) and the bead toe (6).

8. Method according to any of the above claims, characterized in that the core (1) originates from old tyres.

9. Method according to any of claims 1 to 7, characterized in that the core (1) originates from compressed, ground rubber, whether or not mixed with adhesive materials, fabric, new rubber or such like.

10. Method according to any of the above claims, characterized in that the core (1) is built up of one whole.

11. Method according to any of claims 1 to 9, characterized in that the core (1) is built up of one or several whether or not equal blocks (19).

12. Method according to any of the above claims, characterized in that the armouring (7) in the bead toe (6) consists of two rings of steel wire (9) which have each been applied in the side of the bead toe (6), whereby around each steel wire (9) one or several fabric layers (8) have been double-folded and whose free ends end up in the adjacent flanks (4,5).

13. Method according to claim 12, characterized in that between the double-folded parts of the fabric layer, the fabric layers (8) respectively, a hard rubber key (10) has been applied.

14. Method according to any of claims 1 to 11, characterized in that the armouring (7) is formed of several steel wires (9) applied side by side in the bead toe (6).

15. Method according to any of claims 1 to 11, characterized in that the armouring (7) is formed of several steel wires (9) applied side by side in the bead toe (6), whereby the two outermost steel wires (9) which have been applied in a corner of the bead toe (6) are surrounded by at least one double-folded fabric layer (8) whose free ends end up in the flanks (4,5).

16. Method according to any of the above claims, characterized in that the full-rubber tyre has been provided on the bead toe sides (11,12) with one or several layers of rubber-coated fabric (13).

17. Method according to any of the above claims, characterized in that the steel wire (9) is ring-shaped.

18. Method according to claim 17, characterized in that several ring-shaped steel wires (9) are interconnected by means of short, metal pieces (18).

19. Method according to claim 17, characterized in that the steel wire (9) is spiral-shaped.

## Patentansprüche

1. Verfahren zur Herstellung von Vollgummireifen, dadurch gekennzeichnet, daß es aus dem Formen eines Kerns (1) aus wiederverwendetem Material; dem Anbringen auf diesem Kern (1) der Lauffläche (2), der Flanken (4,5) und der Wulstzehe (6) des Reifens, vorzugsweise mit einer Armierung (7) versehen; und dem anschließenden Vulkanisieren des Reifens in einer Form besteht.

2. Verfahren gemäß Anspruch 1, dadurch gekennzeichnet, daß der Vollgummireifen erhalten wird, indem der Kern (1) aus wiederverwendetem Material aufgerauht wird; dieser Kern mit einem als solchen bekannten Klebematerial behandelt wird; dieses Klebematerial getrocknet wird; der so gebildete Kern (1) mit neuem Gummi beschichtet wird, um die Lauffläche (2), die Flanken (4,5) und die Wulstsehe (6) zu formen.

3. Verfahren gemäß Anspruch 2, dadurch gekennzeichnet, daß, nach dem Trocknen des auf dem Kern (1) angebrachten Klebematerials, ein als solcher bekannter Klebegummi vor dem Anbringen der Beschichtung, die zum Formen der neuen Lauffläche (2), der Flanken (4,5) und der Wulstzehe (6) dient, um diesen Kern herumgewickelt wird.

4. Verfahren gemäß Anspruch 2 oder 3, dadurch gekennzeichnet, daß die Lauffläche (2) und die Flanken (4,5) aus einem Ganzen bestehen, während die Wulstzehe (6) den zweiten Teil bildet.

5. Verfahren gemäß Anspruch 4, dadurch gekennzeichnet, daß ein Teil der Flanken (4,5) ein Ganzes mit der Wulstzehe (6) bildet.

6. Verfahren gemäß einem der obengenannten Ansprüche, dadurch gekennzeichnet, daß die Lauffläche (2) mit Flanken (4,5) einerseits und die Wulstzehe (6) eventuell mit Teilflanken (4,5) andererseits durch verschiedene Gummilagen gebildet werden, die nacheinander in der Form angebracht werden, in der der Reifen vulkanisiert wird.

7. Verfahren gemäß einem der Ansprüche 1 bis 5, dadurch gekennzeichnet, daß um den Kern (1) herum, der in einer Form plaziert ist, neuer Gummi zur Bildung der Lauffläche (2), der Flanken (4,5) und der Wulstzehe (6) eingespritzt wird.

8. Verfahren gemäß einem der obengenannten Ansprüche, dadurch gekennzeichnet, daß der Kern (1) von alten Reifen stammt.

9. Verfahren gemäß einem der Ansprüche 1 bis 7, dadurch gekennzeichnet, daß der Kern (1) aus gepreßtem, gemahlenem Gummi stammt, entweder mit Klebematerialien, Gewebe, neuem Gummi oder derartigem vermischt oder nicht.

10. Verfahren gemäß einem der obengenannten Ansprüche, dadurch gekennzeichnet, daß der Kern (1) aus einem Ganzen aufgebaut ist.

11. Verfahren gemäß einem der Ansprüche 1 bis 9, dadurch gekennzeichnet, daß der Kern (1) aus einem oder mehreren, entweder gleichen oder nicht gleichen Blöcken (19) besteht.

12. Verfahren gemäß einem der obengenannten Ansprüche, dadurch gekennzeichnet, daß die Armierung (7) in der Wulstzehe (6) aus zwei Ringen aus Stahldraht (9) besteht, die jeweils in der Seite der Wulstzehe (6) angebracht worden sind, wobei um jeden Stahldraht (9) herum eine oder mehrere Gewebelagen (8) doppelt gefaltet worden sind, und deren freie Enden bis in die benachbarten Flanken (4,5) reichen.

13. Verfahren gemäß Anspruch 12, dadurch gekennzeichnet, daß zwischen den doppelt gefalteten Teilen der Gewebelage, beziehungsweise der Gewebelagen (8), ein Hartgummikeil (10) angebracht wurde.

14. Verfahren gemäß einem der Ansprüche 1 bis 11, dadurch gekennzeichnet, daß die Armierung (7) aus mehreren Stahldrähten (9) gebildet wird, die Seite an Seite in der Wulstzehe (6) angebracht sind.

15. Verfahren gemäß einem der Ansprüche 1 bis 11, dadurch gekennzeichnet, daß die Armierung (7) aus mehreren Stahldrähten (9) gebildet wird, die Seite an Seite in der Wulstzehe (6) angebracht sind, wobei die beiden äußeren Stahldrähte (9), die in einer Ecke der Wulstzehe (6) angebracht worden sind, von zumindest einer doppelt gefalteten Gewebelage (8) umgeben sind, deren freie Enden bis in die Flanken (4,5) reichen.

16. Verfahren gemäß einem der obengenannten Ansprüche, dadurch gekennzeichnet, daß der Vollgummireifen an den Seiten (11,12) der Wulstzehe mit einer oder mehreren Lagen von gummibeschichtetem Gewebe (13) versehen worden ist.

17. Verfahren gemäß einem der obengenannten Ansprüche, dadurch gekennzeichnet, daß der Stahldraht (9) ringförmig ist.

18. Verfahren gemäß Anspruch 17, dadurch gekennzeichnet, daß mehrere ringförmige Stahldrähte (9) mittels kurzer Metallstücke (18) miteinander verbunden sind.

19. Verfahren gemäß Anspruch 17, dadurch gekennzeichnet, daß der Stahldraht (9) spiralförmig ist.

## Revendications

1. Procédé pour fabriquer des bandages pleins en caoutchouc, caractérisé en ce qu'il comprend les étapes consistant à former une partie centrale (1) à partir d'une matière recyclée; à appliquer, sur cette partie centrale (1), la bande de roulement (2), les flancs (4, 5) et la pointe de talon (6) du bandage de préférence munie d'une armature (7); et à vulcaniser ensuite le bandage dans un moule.

2. Procédé selon la revendication 1, caractérisé en ce qu'on obtient le bandage plein en caoutchouc en rendant rugueuse la partie centrale (1) réalisée en une matière recyclée; en traitant cette partie centrale avec une matière adhésive connue en soi; en séchant cet adhésif; en recouvrant d'un nouveau caoutchouc la partie centrale (1) ainsi formée pour obtenir la bande de roulement (2), les flancs (4, 5) et la pointe de talon (6).

3. Procédé selon la revendication 2, caractérisé en ce que, après séchage de la matière adhésive qui a été appliquée sur la partie centrale (1), on entoure cette partie centrale d'un caoutchouc d'adhérence connu en soi, avant l'application du revêtement destiné à former la nouvelle bande de roulement (2), les flancs (4, 5) et la pointe de talon (6).

4. Procédé selon la revendication 2 ou 3, caractérisé en ce que la bande de roulement (2) et les flancs (4, 5) constituent un tout, tandis que la pointe de talon (6) forme la seconde partie.

5. Procédé selon la revendication 4, caractérisé en ce qu'une partie des flancs (4, 5) forme un tout avec la pointe de talon (6).

6. Procédé selon l'une quelconque des revendications ci-dessus, caractérisé en ce que la bande de roulement (2) avec les flancs (4, 5), d'une part, et la pointe de talon (6) avec éventuellement une partie des flancs (4, 5), d'autre part, sont réalisés à partir de couches de caoutchouc différentes qui sont appliquées successivement dans le moule dans lequel doit avoir lieu la vulcanisation du bandage.

7. Procédé selon l'une quelconque des revendications 1 à 5, caractérisé en ce que, autour de la partie centrale (1) placée dans un moule, on injecte du nouveau caoutchouc pour former la bande de roulement (2), les flancs (4, 5) et la pointe de talon (6).

8. Procédé selon l'une quelconque des revendications ci-dessus, caractérisé en ce que la partie centrale provient de bandages usages.

9. Procédé selon l'une quelconque des revendications 1 à 7, caractérisé en ce que la partie centrale (1) provient de caoutchouc comprimé, broyé, mélangé ou non avec des matières adhésives, du tissu, du nouveau caoutchouc ou analogues.

10. Procédé selon l'une quelconque des revendications ci-dessus, caractérisé en ce que la partie centrale (1) est réalisée en une seule pièce.

11. Procédé selon l'une quelconque des revendications 1 à 9, caractérisé en ce que la partie centrale (1) est constituée par un ou plusieurs blocs (19) égaux ou non.

12. Procédé selon l'une quelconque des revendications ci-dessus, caractérisé en ce que l'armature (7) dans la pointe de talon (6) est constituée par deux anneaux de fil métallique en acier (9) qui ont été appliqués sur le côté de la pointe de talon (6), une ou plusieurs couches de tissu (8) ayant été repliées autour de chaque fil métallique en acier (9), dont les extrémités libres se terminent dans les flancs adjacents (4, 5).

13. Procédé selon la revendication 12, caractérisé en ce que, entre les parties repliées de la ou des couches de tissu (8), respectivement, on applique une cale (10) en caoutchouc dur.

14. Procédé selon l'une quelconque des revendications 1 à 11, caractérisé en ce que l'armature (7) est formée à partir de plusieurs fils métalliques en acier (9) appliqués côte à côte dans la pointe de talon (6).

15. Procédé selon l'une quelconque des revendications 1 à 11, caractérisé en ce que l'armature (7) est réalisée à partir de plusieurs fils métalliques en acier (9) appliqués côte à côte dans la pointe de talon (6), les deux fils métalliques en acier (9) les plus à l'extérieur qui ont été appliqués dans un coin de la pointe de talon (6) étant entourés par au moins une couche de tissu repliée (8) dont les extrémités libres se terminent dans les flancs (4, 5).

16. Procédé selon l'une quelconque des revendications ci-dessus, caractérisé en ce que le bandage plein en caoutchouc est muni, sur les côtés (11, 12) de la pointe de talon, d'une ou de plusieurs couches de tissu (13) enrobé de caoutchouc.

17. Procédé selon l'une quelconque des revendications ci-dessus, caractérisé en ce que le fil métallique en acier (9) est de forme annulaire.

18. Procédé selon la revendication 17, caractérisé en ce qu'on relie mutuellement plusieurs fils métalliques en acier annulaires (9) à l'aide de courtes pièces métalliques (18).

19. Procédé selon la revendication 17, caractérisé en ce que le fil métallique en acier (9) est formé en spirale.
